# FASCICULE DE BREVET EUROPEEN

(11) **EP 1 174 045 B1**
(45) Date de publication et mention de la délivrance du brevet: **15.12.2004**
(21) Numéro de dépôt: 01460048.0
(22) Date de dépôt: 19.07.2001
(51) Int. Cl.: A23L 3/48, A23P 1/00, A23L 1/212, A23L 1/2165

(54) **Procédé de production d'un produit alimentaire déshydraté à partir d'une matière végétale humide**
Verfahren zur Herstellung von dehydrierten Nahrungsmittelprodukten mittels feuchtem Pflanzenmaterial
Process for making a dry foodstuff from a wet vegetable material

(30) Priorité: 21.07.2000 FR 0009564
(43) Date de publication de la demande: 23.01.2002
(73) Titulaire: Diana Ingredients, 56250 Saint Nolff (FR)
(72) Inventeur: Boullin, Anne, 24160 Exideuil (FR); Fileau, Philippe, 24160 Saint-Medard-D'Exideuil (FR); Megard, Denis, 35460 Saint-Brice-En-Cogles (FR)
(74) Mandataire: Le Faou, Daniel

(56) Documents cités:
- EP-A- 0 449 005
- FR-A- 746 255
- FR-A- 1 364 898
- FR-A- 2 796 814
- GB-A- 923 252
- GB-A- 938 381
- GB-A- 1 059 609
- US-A- 3 592 667
- US-A- 4 189 343

## Description

La présente invention concerne un procédé de production d'un produit alimentaire sous forme de poudre, de granulés ou de flocons, par séchage d'une matière végétale humide sous forme de couche mince sur une paroi chaude, notamment sur la paroi d'un cylindre - ou d'une paire de cylindres - chauffant (s).

Par l'expression «matière végétale» on entendra dans la présente description, ainsi que dans les revendications qui suivent, une plante - ou partie de plante - comestible, ou un mélange de plusieurs plantes, notamment des fruits, des légumes, des champignons, des céréales, des herbes, et de manière générale tous végétaux susceptibles de servir à l'alimentation humaine et/ou animale.

La purée et le jus qui constituent la matière de départ peuvent être obtenus notamment par broyage, raffinage, malaxage et/ou pressage des végétaux en question, par exemple par broyage de la pulpe s'il s'agit d'un fruit.

La déshydratation de la matière se fait traditionnellement sur la paroi d'un tambour cylindrique rotatif, d'axe horizontal tournant à faible vitesse, en général en métal chromé.

Le tambour est chauffé intérieurement, et possède une paroi métallique chauffée, sur laquelle on étale en continu la matière à déshydrater, de telle sorte qu'elle y forme une couche mince et uniforme.

La température et la vitesse de rotation du tambour sont choisies de telle manière que le séchage voulu soit obtenu avant un tour complet de rotation.

Le produit sec forme un film qui est alors récupéré, toujours en continu, par raclage de la paroi, en amont du poste de dépôt de la matière à traiter.

Cette technique, bien connue, est généralement appelée technique «d'encollage».

Dans une variante, la matière est appliquée contre le tambour, au cours du traitement, au moyen d'un ou plusieurs rouleaux presseurs - également rotatifs - appelés «satellites».

Une autre technique connue, à laquelle s'applique également la présente invention, consiste à faire passer la matière entre deux cylindres presseurs à parois chauffées, également en métal chromé, disposés côte à côte, avec leurs axes parallèles et situés dans un même plan horizontal.

Les deux cylindres tournent en sens inverse, leurs génératrices en regard étant situées à faible distance l'une de l'autre, et se déplaçant du haut vers le bas.

La matière, qui est déversée entre les deux rouleaux est donc soumise à un laminage, et forme une couche fine qui se déshydrate progressivement sur les rouleaux chauffés.

Ces différentes techniques peuvent être mises en oeuvre aussi bien à la pression atmosphérique que sous vide ; elles permettent d'obtenir un séchage rapide de la matière.

De tels procédés sont couramment utilisés pour le séchage de jus et/ou de purées de fruits, de légumes ou de céréales, en vue de la production de poudre, granulés, paillettes, flocons et copeaux rentrant dans la confection d'un large éventail de produits alimentaires, parmi lesquels on peut citer, à titre d'exemples, des aliments pour bébés, des mueslis, des fourrages de biscuits, et des soupes déshydratées.

A de rares exceptions près, telles que, par exemple la banane et la pomme de terre, qui sont très riches en amidon, les matières de départ ne peuvent être traitées en l'état.

Il est nécessaire d'y incorporer un adjuvant de séchage.

Ceci est particulièrement vrai pour les végétaux qui sont riches en sucre.

En l'absence d'adjuvant, la matière colle sur le tambour, ou contre les cylindres de laminage, ainsi que sur le couteau racleur et on observe un phénomène de gratinage, voire de caramélisation du produit, qu'il est difficile de décoller de la paroi chaude assurant la déshydratation ; le produit obtenu est de mauvaise qualité, aussi bien sur le plan gustatif que sur le plan de son aspect.

Ce gratinage, qui s'accompagne de l'apparition de points noirs, s'observe même si on fait usage de cylindres chromés en raison de la forte teneur en sucre des mélanges à déshydrater.

Traditionnellement, les adjuvants qui sont utilisés, pour permettre une déshydratation dans de bonnes conditions, sont composés de deux éléments, à savoir un agent de texture et un agent lubrifiant.

L'agent de texture a pour fonction de donner du corps au mélange, et de favoriser son dépôt sous forme de couches régulières sur la paroi chauffante, en augmentant le taux de matière sèche du mélange.

Il a également pour intérêt - le cas échéant - de conférer une certaine onctuosité au produit final, lorsque celui-ci est destiné à être réhydraté avant consommation.

L'apport de cet agent de texture est très souvent indispensable, à l'exception de certaines applications végétales spécifiques, par exemple la pomme.

Le pourcentage d'agent de texture, selon les applications, peut atteindre jusqu'à 70 % en poids de matière sèche du mélange.

Comme support de séchage, on utilise usuellement de la farine ou de l'amidon de blé, de mais ou de riz.

L'agent lubrifiant traditionnellement utilisé est la lécithine de soja.

Son rôle est de lubrifier le cylindre, afin d'éviter que le mélange ne gratine sur la paroi chaude de celui-ci, et de permettre le décollement du produit sec au niveau du couteau racleur, servant à extraire le produit déshydraté en fin de traitement.

La lécithine de soja permet également d'obtenir un flocon brillant, d'aspect agréable.

La dose de lécithine traditionnellement utilisée est comprise entre 0,5 et 1,5 % en poids sec du mélange.

A l'exception de quelques fruits et légumes très riches en amidon, telles que la banane et la pomme de terre, la lécithine de soja est un ingrédient jugé indispensable dans toutes les formules pour la fabrication de flocons de matières végétales ayant des formes régulières, d'aspect brillant, et de qualité homogène.

La présente invention a pour objectif de proposer un procédé de production d'un produit alimentaire déshydraté à partir d'une matière végétale humide, notamment sous forme de jus ou de purée, par séchage de ladite matière sous forme de couche mince sur une paroi chaude, qui puisse se dispenser de la lécithine de soja à titre d'agent lubrifiant et d'adjuvant de séchage.

Ce souci de se dispenser de l'utilisation de la lécithine de soja résulte de considérations liées au développement de certaines matières premières génétiquement modifiées, dont le soja, qui n'assure pas au consommateur une parfaite sécurité sur son caractère naturel. En Europe, de nombreux industriels ne veulent plus utiliser d'ingrédients contenant, ou susceptibles de contenir, des matières premières génétiquement modifiées (maïs et soja).

On peut penser que ceci conduira, à court ou moyen terme, à l'interdiction pure et simple d'ingrédients issus de la filière soja dans les produits alimentaires.

Les contraintes que s'est imposée la demanderesse dans la recherche d'une technique de substitution ont été, notamment, les suivantes :
- utilisation d'un produit entièrement végétal et naturel ;
- utilisation d'un produit ne présentant aucun risque de présence d'agents allergènes ;
- utilisation d'un produit efficace quelle que soit la matière végétale à traiter, et quel qu'en soit la formulation - avec ou sans agent de texture - ;
- possibilité d'utilisation dans toutes les applications, y compris pour la confection d'aliments pour bébés ;
- utilisation d'un produit non considéré comme additif alimentaire nécessitant l'étiquetage avec un code en «E» ;
- absence de lécithine.

Outre ces contraintes, l'invention s'est bien entendu fixée comme objectif de fournir un procédé utilisant un agent lubrifiant possédant les mêmes propriétés, ou pratiquement les mêmes propriétés, que la lécithine de soja pour ce qui est de lubrifier le cylindre et de permettre un décollement efficace du film de produit sec au niveau du couteau racleur et pour ce qui est de l'obtention d'un produit sec, tel qu'un flocon, d'aspect brillant et de qualité homogène.

Un autre impératif a été également de rechercher un procédé utilisant un produit dont le goût soit neutre, de manière à ne pas influer sur le goût du produit final.

Il a bien entendu été suggéré, pour répondre à ces attentes, d'incorporer des matières grasses, telles que de l'huile, directement dans le produit à sécher.

L'introduction de matières grasses avant séchage sur cylindre dans des mélanges riches en protéines émulsifiantes est possible. C'est notamment le cas pour des formules de lait végétal (EP-A-0 830 820), de lait de chèvre (EP-A-0 409 138) ou de produits pour animaux (Nielsen, 1984, Lebensmittel-Wissenschaft und Technol.), 17(3) 151-154).

Par contre, dans des mélanges végétaux naturellement peu riches en protéines, il est impossible d'incorporer de l'huile végétale de façon homogène. Quelque soit la qualité du mélange, l'huile n'est pas répartie de façon homogène dans le mélange aqueux (purée et/ou jus avec ou sans agent de texture) et il y a déphasage partiel lors du stockage avant séchage. Ce déphasage est plus ou moins rapide en fonction de la température du mélange à sécher, et il peut aussi se produire si le mélange est pasteurisé avant l'encollage.

De manière surprenante et inattendue, la demanderesse s'est rendu compte que les différents objectifs détaillés plus haut sont atteints en répandant (par étalement) sur la paroi, durant toute l'opération de séchage, avant d'y déposer la couche mince à sécher, un film composé exclusivement d'huile végétale. Selon une caractéristique importante de l'invention, le procédé est mis en oeuvre sans adjonction de lécithine, en particulier sans adjonction de lécithine de soja.

La quantité d'huile répandue peut être réduite. Elle est toutefois suffisante pour assurer son rôle d'agent lubrifiant et d'adjuvant de séchage.

Cela est particulièrement intéressant car les produits traités ne renfermant naturellement que très peu de matière grasse, la quantité d'huile qu'ils sont susceptibles d'absorber par mise en contact avec le film sera également très réduite.

Par ailleurs, selon d'autres caractéristiques avantageuses mais non limitatives de ce procédé :
- ledit séchage est réalisé sur la paroi externe d'au moins un cylindre rotatif ;
- la quantité d'huile déposée est au maximum de 1 %, et de préférence 0,5 % en poids, par rapport au poids de la matière sèche ;
- ledit étalement d'huile est réalisé par enduction de la paroi à l'aide d'un rouleau ;
- ledit étalement d'huile est réalisé par pulvérisation, notamment par micro-pulvérisation ;
- l'on répand environ 5 à 50, et de préférence 10 à 20 g d'huile/heure/m² de paroi ;
- le film d'huile végétale est répandu par intermittence ;
- on utilise de l'huile de palme ;
- la matière végétale humide est une purée de fruits et/ou de légumes.

Par le terme <<micro-pulvérisation>>, on entend le fait de pulvériser une quantité extrêmement faible d'huile, sous la forme d'un brouillard, de manière à déposer sur la paroi un film le plus fin possible.

D'autres caractéristiques et avantages de la présente invention apparaîtront à la lecture détaillée qui va suivre de certains modes de réalisation privilégiés. Cette description sera faite en référence aux dessins annexés dans lesquels :
- la figure 1 est un schéma de principe d'une disposition de séchage sur cylindre, apte à servir à la mise en oeuvre du procédé selon l'invention ;
- la figure 2 est un schéma d'une variante du dispositif de la figure 1, à deux rouleaux.

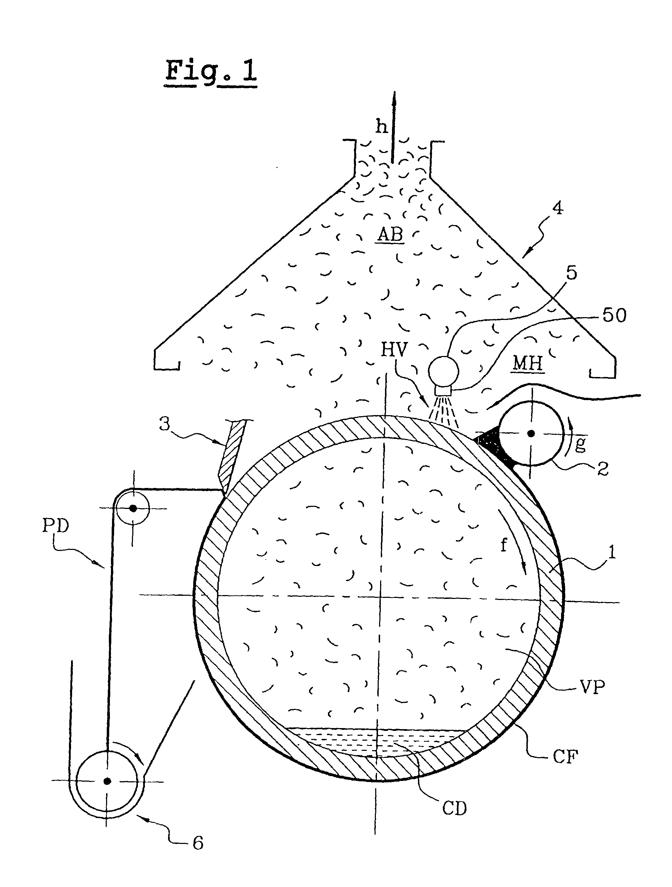

Sur la figure 1, on a représenté très schématiquement un dispositif de séchage sur cylindre, de type connu.

Le dispositif comporte un cylindre creux 1 à paroi métallique, d'axe horizontal, qui est entraîné en rotation, à vitesse uniforme, comme symbolisé par la flèche **f**.

La référence 2 représente un rouleau satellite, dont le sens de rotation est symbolisé par la flèche **g**.

Le satellite 2 est disposé dans la région supérieure et à proximité du cylindre 1. De préférence, les deux cylindres 1, 2 sont chromés.

La matière humide à traiter, référencée **MH**, est déversée en partie supérieure du cylindre 1.

Sa paroi est chauffée par de la vapeur **VP** introduite à l'intérieur du cylindre.

Le condensat est référencé **CD**.

Grâce à la présence du satellite 2, la matière est étalée de manière régulière et homogène sur toute la longueur du cylindre, formant une couche uniforme et fine **CF**.

Cette couche adhère à la paroi chaude du cylindre, et se déshydrate progressivement au cours de la rotation.

Après environ trois quarts de tour, la matière est sèche et le produit déshydraté est enlevé de la paroi du cylindre au moyen d'un couteau racleur 3.

Le produit déshydraté **PD**, toujours sous forme de film, est récupéré et évacué, vers une vis déchiqueteuse rotative 6, qui le transforme en flocons, et le transfère transversalement.

Il est prévu au-dessus du cylindre une hotte 4 apte à récupérer le mélange d'air et de buées **AB** généré en cours de traitement, et à l'évacuer vers le haut, comme symbolisé par la flèche **h**.

A titre indicatif, la vitesse de rotation du cylindre est comprise entre 1 et 6 tours par minute, et préférentiellement entre 2 et 4 tours par minute, ce qui correspond à des temps de séchage compris entre 5 et 60 secondes en fonction du diamètre du cylindre.

Toujours à titre indicatif, le séchage se fait à une température comprise entre 120 et 170° C, lorsqu'il est effectué à la pression atmosphérique.

Les températures mises en oeuvre avec des sécheurs sous vide peuvent être inférieures à ces valeurs.

Selon l'invention, on répand sur la paroi du cylindre 1, avant d'y déposer la couche mince à sécher, un film d'huile végétale **HV**.

Ceci est réalisé, dans l'exemple représenté, au moyen d'une rampe 5 équipée de buses de projection 50. La rampe surplombe la totalité de la longueur du cylindre.

Elle est placée en amont du rouleau satellite 2, lorsque l'on considère la zone de dépôt de la matière **MH** et le sens de rotation du rouleau 1.

Bien entendu, la pression de projection de l'huile devra être choisie de telle manière que les particules projetées ne soient pas aspirées par la hotte avant leur dépôt sur la paroi.

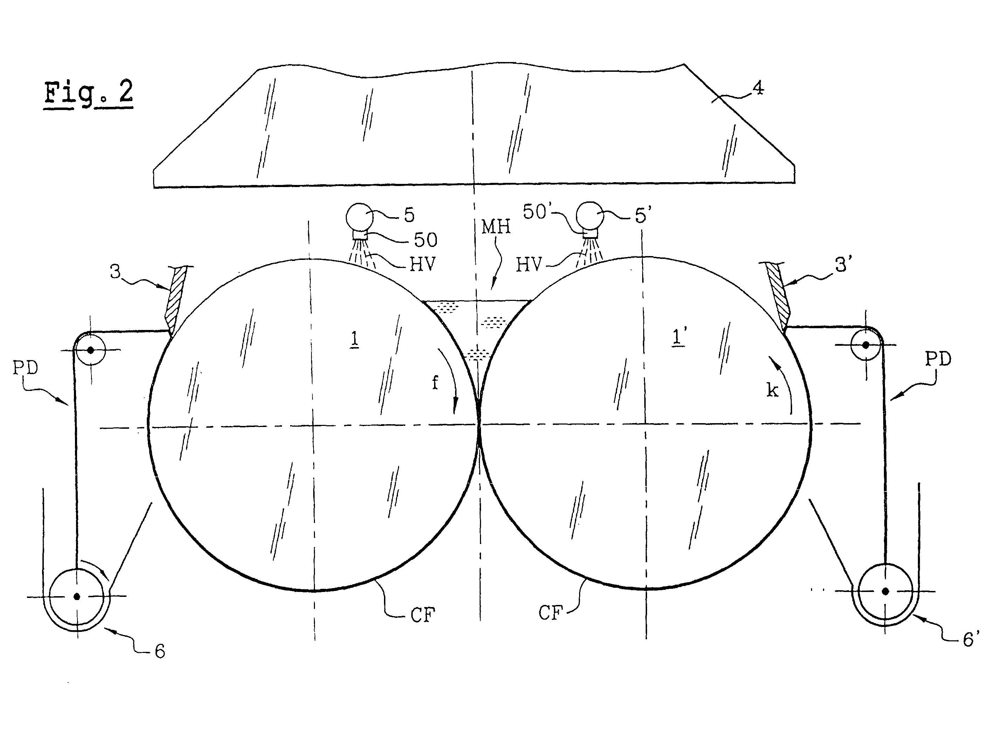

Dans le mode de réalisation de la figure 2, on utilise deux cylindres presseurs chromés 1 et 1' à parois chauffées, disposés côte à côte, avec leurs axes parallèles et situés dans un même plan horizontal.

Les deux cylindres tournent en sens inverse (flèches **f** et **k**), leurs génératrices étant situées à faible distance l'une de l'autre.

La matière **MH** est déversée entre les deux rouleaux 1 et 1'. Elle est soumise à un laminage et forme une couche fine **CF** qui se déshydrate progressivement sur les rouleaux chauffés.

A chaque rouleau 1, 1' est associé une rampe 5, respectivement 5', équipée de buses 50, 50' du même type que celle précédemment décrite

Comme dans le mode de réalisation de la figure 1, le produit déshydraté est enlevé de la paroi de chaque cylindre 1, 1' au moyen d'un rouleau racleur 3, respectivement 3', et le produit déshydraté **PD** est recueilli dans un dispositif 6, respectivement 6' à vis de déchiquetage et d'évacuation.

Nous allons maintenant d'écrire quelques exemples de réalisation de production, conformément au procédé selon l'invention.

Ces fabrications ont été réalisées dans les conditions suivantes :
- utilisation d'un cylindre chauffant de 10,9 m² utiles ;
- largeur utile du cylindre : 2,3 m ;
- dépôt de l'huile par pulvérisation ;
- rampe à 6 buses ;
- pression du bac (circuit d'alimentation) : 0,15 Bar ;
- pression de buses : 0,30 Bar ;
- la pulvérisation est réalisée pendant un tour de cylindre puis arrêtée pendant trois tours, et ainsi de suite ;
- huile utilisée - huile de palme raffinée du commerce.

Les autres paramètres des essais et les résultats obtenus sont regroupés dans le tableau ci-après :

| **Produit** | **Formule (% sur MST)** **(1)** | **Vitesse rotation cylindre** | **Débit (kg/h)** **(2)** | **Quantité d'huile (%)** **(3)** | **Quantité Produite (kg)** **(4)** | **Commentaires** |
|---|---|---|---|---|---|---|
| Carotte | Carotte : 100 % (+ acide ascorbique) | 40 sec/tr | 33 | 0.41 | 49 | Très beau film, séchage très facile |
| Céleri-branche | Céleri : 43 Amidon : 28 Glucose : 29 | 24 sec/tr | 38 | 0.40 | 105 | Séchage facile alors que produit habituellement difficile à faire et seulement dosé à 24 % de céleri |
| Céleri-branche | Céleri: 75 | 24 sec/tr | 24.3 | 1.00 | 30.4 | Produit infaisable avec lécithine |
| Orange | Orange : 41 Amidon : 24 Saccharose Colorant: 17 | 24 sec/tr | 95 | 0.15 | 122 | Aucunes difficultés de séchage |
| Oignon | Oignon : 40 Amidon : 30 Glucose : 30 | 40 sec/tr | 60.3 | 0.17 | 223 | |

| | | | | | | |
|---|---|---|---|---|---|---|
| (1) : pourcentages en poids par rapport à la quantité totale de matière sèche ; | | | | | | |
| (2) : débit de flocons obtenus ; | | | | | | |
| (3) : quantité d'huile détectée dans les flocons, en pourcentage en poids par rapport au poids de flocons ; | | | | | | |
| (4) : quantité totale de flocons obtenue. | | | | | | |

La micro-pulvérisation d'huile est mise en oeuvre pendant toute la durée du traitement. Elle permet d'obtenir un excellent décollement du film et présente de nombreux avantages par rapport à l'incorporation de lécithine dans le mélange :
- meilleure lubrification que la lécithine ;
- dosage beaucoup plus faible que la lécithine pour une meilleure efficacité ;
- production d'un film plus épais, d'où un meilleur raclage ;
- absence d'adhérence sur la lame lors du décollement ;
- absence d'adhérence sur le cylindre chauffant ;
- meilleur entraînement su bourbier, c'est à dire de la matière humide en attente d'être entraînée d'où une absence de collage sur les satellites ;
- même productivité (voire meilleure que la technique actuelle) ;
- obtention de flocons de légumes, notamment céleri, épinards, non réalisables avec la lécithine.

Bien entendu, des huiles autres que l'huile de palme peut convenir également. Il s'agit par exemple d'huiles de tournesol, de colza, etc.

Si on fait usage d'un cylindre ayant une surface utile de 10,9 m² (comme indiqué plus haut) tournant à une vitesse comprise entre 2 et 4 tr/mm (soit entre 120 et 240 tr/h), cela correspond à lubrifier entre 1300 et 2600 m²/h environ, pour y déposer entre 100 et 150 g d'huile par heure.

Dans les essais, l'épaisseur mesurée du film était de 0,15 à 0,20 mm et la quantité d'huile variait d'environ 10 à environ 20 g d'huile/heure/m² de paroi.

On ne sortirait pas du cadre de l'invention en étalant l'huile végétale sur la paroi chaude autrement que par pulvérisation.

Dans le cas où la paroi chaude est un cylindre rotatif (comme dans chacun des deux modes de réalisation illustrés ci-dessus), le dépôt d'huile peut se faire par exemple par enduction à l'aide d'un rouleau huileur en appui contre le cylindre, et tournant en sens inverse de celui-ci.

Il est à noter qu'à de si petits dosages, l'huile végétale est considérée, sur le plan réglementaire (directive 89/107/CEE) comme un auxiliaire technologique dans la liste des ingrédients contenus dans les flocons obtenus. Il n'y a pas d'obligation de le faire figurer comme tel dans l'étiquetage apposé sur le conditionnement.

## Revendications

1. Procédé de production d'un produit alimentaire déshydraté à partir d'une matière végétale humide (**MH**), notamment sous forme de jus ou de purée, par séchage de ladite matière sous forme de couche mince (**CF**) sur une paroi chaude, **caractérisé par le fait que** l'on répand par étalement, durant toute l'opération, un film constitué exclusivement d'huile végétale (**HV**) sur ladite paroi (1) avant d'y déposer la couche mince (**CF**) à sécher, ceci sans adjonction de lécithine.

2. Procédé selon la revendication 1, **caractérisé par le fait que** ledit séchage est réalisé sur la paroi externe d'au moins un cylindre rotatif (1 ; 1').

3. Procédé selon l'une des revendications 1 ou, **caractérisé par le fait que** la quantité d'huile déposée est au maximum de 1 %, et de préférence 0,5 % en poids, par rapport au poids de la matière sèche.

4. Procédé selon l'une des revendications 1 à 3, **caractérisé par le fait que** ledit étalement d'huile est réalisé par enduction de la paroi à l'aide d'un rouleau.

5. Procédé selon l'une des revendications 1 à 3, **caractérisé par le fait que** ledit étalement d'huile est réalisé par pulvérisation, notamment par micro-pulvérisation.

6. Procédé selon la revendication 5, **caractérisé par le fait que** l'on répand environ 5 à 50, et de préférence 10 à 20 g d'huile/heure/m² de paroi.

7. Procédé selon l'une des revendications 1 à 6, **caractérisé par le fait que** le film d'huile végétale est répandu par intermittence.

8. Procédé selon l'une des revendications 1 à 7, **caractérisé par le fait qu'**on utilise de l'huile de palme.

9. Procédé selon l'une des revendications 1 à 8, **caractérisé par le fait que** la matière végétale humide est une purée de fruits et/ou de légumes.

## Claims

1. Process for producing a dehydrated food product from a wet plant material **(MH)**, in particular in juice or purée form, by drying the said material in the form of a thin layer **(CF)** on a hot wall, **characterized in that** a film exclusively consisting of vegetable oil **(HV)** is distributed by spreading, during the whole operation on the said wall (1) before depositing thereon the thin layer **(CF)** to be dried, this being without addition of lecithin.

2. Process according to Claim 1, **characterized in that** the said drying is carried out on the outer wall of at least one rotating cylinder (1; 1').

3. Process according to Claim 1, **characterized in that** the quantity of oil deposited is at most 1%, and preferably 0.5% by weight, relative to the weight of the dry matter.

4. Process according to one of Claims 1 to 3, **characterized in that** the said spreading of oil is carried out by coating the wall with the aid of a roller.

5. Process according to one of Claims 1 to 3, **characterized in that** the said spreading of oil is carried out by spraying, in particular by microspraying.

6. Process according to Claim 5, **characterized in that** there are distributed about 5 to 50, and preferably 10 to 20 g of oil/hour/m² of wall.

7. Process according to one of Claims 1 to 6, **characterized in that** the film of vegetable oil is distributed intermittently.

8. Process according to one of Claims 1 to 7, **characterized in that** palm oil is used.

9. Process according to one of Claims 1 to 8, **characterized in that** the wet plant material is a fruit and/or vegetable purée.

## Patentansprüche

1. Verfahren zur Herstellung eines entwässerten Lebensmittelprodukts ausgehend von einem feuchten Pflanzenmaterial (MH), insbesondere in Form von Saft oder Brei, durch Trocknen des Materials in Form einer dünnen Schicht (CF) auf einer warmen Wand, **dadurch gekennzeichnet, dass** man während des ganzen Verfahrens durch Spreiten einen Film, der ausschließlich aus Pflanzenöl (HV) besteht, auf der Wand (1) ausbreitet, bevor man darauf die zu trocknende dünne Schicht (CF) abscheidet, dies ohne Hinzufügen von Lecithin.

2. Verfahren nach Anspruch 1, **dadurch gekennzeichnet, dass** das Trocknen auf der äußeren Wand mindestens eines Drehzylinders (1; 1') durchgeführt wird.

3. Verfahren nach einem der Ansprüche 1 oder 2, **dadurch gekennzeichnet, dass** die abgeschiedene Ölmenge maximal 1 Gewichts-% und vorzugsweise 0,5 Gewichts-%, bezogen auf das Gewicht des trockenen Materials, beträgt.

4. Verfahren nach einem der Ansprüche 1 bis 3, **dadurch gekennzeichnet, dass** das Spreiten von Öl durch Beschichten der Wand mit Hilfe einer Walze durchgeführt wird.

5. Verfahren nach einem der Ansprüche 1 bis 3, **dadurch gekennzeichnet, dass** das Spreiten von Öl durch Zerstäubung, insbesondere Mikrozerstäubung, durchgeführt wird.

6. Verfahren nach Anspruch 5, **dadurch gekennzeichnet, dass** man etwa 5 bis 50 und vorzugsweise 10 bis 20 g Öl/Stunde/m² Wand ausbreitet.

7. Verfahren nach einem der Ansprüche 1 bis 6, **dadurch gekennzeichnet, dass** der Film aus Pflanzenöl in Zeitabständen ausgebreitet wird.

8. Verfahren nach einem der Ansprüche 1 bis 7, **dadurch gekennzeichnet, dass** man Palmöl verwendet.

9. Verfahren nach einem der Ansprüche 1 bis 8, **dadurch gekennzeichnet, dass** das feuchte Pflanzenmaterial ein Brei von Früchten und/oder Gemüse ist.
